(19) **Europäisches Patentamt**

**European Patent Office**

**Office européen des brevets**

(11) Veröffentlichungsnummer : **0 226 569 B1**

(12) **EUROPÄISCHE PATENTSCHRIFT**

(45) Veröffentlichungstag der Patentschrift :
16.01.91 Patentblatt 91/03

(51) Int. Cl.$^5$ : **G01N 21/35**

(21) Anmeldenummer : **86890321.2**

(22) Anmeldetag : **18.11.86**

(54) Verfahren zur quantitativen Messung von Kohlenwasserstoffen.

Die Akte enthält technische Angaben, die nach dem Eingang der Anmeldung eingereicht wurden und die nicht in dieser Patentschrift enthalten sind.

(30) Priorität : 09.12.85 AT 3566/85

(43) Veröffentlichungstag der Anmeldung :
24.06.87 Patentblatt 87/26

(45) Bekanntmachung des Hinweises auf die
Patenterteilung :
16.01.91 Patentblatt 91/03

(84) Benannte Vertragsstaaten :
CH DE FR GB IT LI SE

(56) Entgegenhaltungen :
EP-A- 0 094 374
EP-A- 0 123 672
DE-A- 2 557 508
US-A- 3 696 247
US-A- 3 790 798
US-A- 3 973 848

(73) Patentinhaber : AVL Gesellschaft für
Verbrennungskraftmaschinen und
Messtechnik mbH.Prof.Dr.Dr.h.c. Hans List
Kleiststrasse 48
A-8020 Graz (AT)

(72) Erfinder : Schiefer, Erich Josef, Dr.
Neulassing 17
A-8900 Selzthal (AT)
Erfinder : Schindler, Wolfgang, Dr.
Mariatrosterstrasse 113
A-8043 Graz (AT)
Erfinder : Krempl, Peter W., Dr.
Stiftingtalstrasse 71/4/12
A-8010 Graz (AT)

(74) Vertreter : Krause, Walter, Dr. Dipl.-Ing.
Postfach 200 Singerstrasse 8
A-1010 Wien (AT)

**Beschreibung**

Die Erfindung betrifft ein Verfahren zur quantitativen Messung von Kohlenwasserstoffen in Proben ungefilterter Verbrennungsabgase, wobei die Infrarottransmission der die Probe und ein Referenzvolumen durchdringenden elektromagnetischen Strahlung gemessen und die Differenz der Strahlungsintensitäten als entsprechender Meßwert verwendet wird.

Ein Abgasanalysiersystem zur Durchführung des eingangs genannten Verfahrens ist aus der DE-OS 25 57 508 bekannt. Dabei wird Infrarotstrahlung eines Wellenlängenbereiches von 3 bis 5 µm abwechselnd durch eine Referenzzelle, die ein Referenzgas enthält, und durch eine Gasprobenzelle hindurchgeleitet, welche beispielsweise Fahrzeugabgas enthält. Beide Zellen weisen eingangs- sowie ausgangsseitig Filter auf, welche für Strahlung im obengenannten Wellenlängenbereich durchlässig sind. Nach dem Passieren der Probenzelle bzw. der Referenzzelle, wird die Infrarotstrahlung durch einen Konkavspiegel auf eine Detektoranordnung fokussiert, welche zwei Infrarotdetektoren enthält. Vor jedem der Infrarotdetektoren befindet sich ein Infrarotfilter, wobei das eine ein Strahlungsband durchläßt, dessen Mitte bei 4,74 µm liegt, wo die maximale CO-Absorption auftritt; das andere Filter, zur Messung der Kohlenwasserstoffkonzentration, läßt ein Strahlungsband mit einer Wellenlänge durch, deren Mitte beim.

Den Fachmann bekommt also aus den DE-OS 2557508 die Information, bei einem Gemisch von mehreren Kohlenwasserstoffen ihre jeweilige Konzentration im jeweiligen Absorptionsmaximum zu messen. Absorptionsmaximum des Kohlenwasserstoffes Hexan, also bei 3,41 µm liegt. Die von den Detektoren erzeugten elektrischen Signale lassen nach deren Auswertung auf die CO- bzw. auf die Kohlenwasserstoffkonzentration, bezogen auf die Referenzzelle schließen. Üblicherweise, für einen Wellenlängenbereich von 3,2 µm bis 3,7 µm zur Messung der Kohlenwasserstoffbeladung verwendete Interferenzfilter, liefern jedoch nur dann gravimetrisch richtige Meßwerte der Gesamtkohlenwasserstoffe, wenn sich die prozentuale Zusammensetzung der Kohlenwasserstoffkomponenten des Verbrennungsabgases nicht oder nur sehr gering ändert. Bei Verwendung dieser Interferenzfilter, sind systematische, durch die sich ändernde Zusammensetzung bedingte, Ungenauigkeiten von typisch 10 bis 30%, teilweise bis 100% des Meßwertes möglich.

Bei der vorliegenden Erfindung kann dagegen durch Auswahl eines speziellen Wellenlängenbereichs zur quantitativen Messung aller vorhandenen Kollehwasserstoffe deren integrale Infrarotabsorption, unabhängig von ihrem jeweiligen prozentualen Anteil, ermittelt werden.

Eine störende Größe bei der quantitativen Bestimmung der Kohlenwasserstoffe, wenn diese auch in ungefilterten Verbrennungsabgasen ermittelt werden sollen, ist der von den Betriebsparametern der Brennkraftmaschine abhängige, variierende Gehalt an breitbandig absorbierenden graphitischen Teilchen. Dazu ist aus der AT-PS 376 301 ein Verfahren bekannt geworden, worin durch Verwendung elektromagnetischer Strahlung eines Wellenlängenbereiches von 3,8 bis 4,15 µm, bei Durchstrahlung eines mit graphitischen Teilchen, insbesondere Rußteilchen, beladenen Abgases aus der durch Absorption verursachten Verminderung der Strahlungsintensität, auf die Teilchenbeladung geschlossen werden kann. In diesem Infrarotbereich erhält man ein für graphitische Teilchen ungestörtes Meßergebnis, da keine der im Auspuffgas vorhandenen Abgaskomponenten einen Beitrag zur zu messenden Absorption liefert und somit Absorption in diesem Frequenzbereich, wie überraschend gefunden, ausschließlich von den breitbandig absorbierenden graphitischen Teilchen herrührt.

Aufgabe der Erfindung ist es, ein Verfahren der eingangs genannten Art so zu verbessern, daß die quantitative Messung von Kohlenwasserstoffen in gasförmigen Proben selbst dann Ergebnisse hoher Meßgenauigkeit liefert, wenn sich die prozentuale Zusammensetzung der Kohlenwasserstoffkomponenten im zu messenden Abgas stark ändert.

Erfindungsgemäß wird diese Aufgabe dadurch erfüllt, daß zur Erfassung der Gesamtmasse der in der gasförmigen Probe vorhandenen gasförmigen und kondensierten Kohlenwasserstoffe elektromagnetische Strahlung eines Frequenzbandes mit einer Zentralwellenlänge von 3,445 ± 0,03 µm, einer Halbwertsbreite von 0,07 bis 0,14 µm, mit einem 5% Cuton bei einer Wellenlänge > 3,35 µm und einem 5% Cutoff bei einer Wellenlänge < 3,58 µm verwendet und dessen integrale Infrarotabsorption gemessen wird, daß die Gesamtmasse der in der Probe enthaltenen Kohlenstoffpartikel durch Messung der Infrarottransmission, bei Verwendung von Strahlung im Bereich von 3,8 bis 4,15 µm, festgestellt wird, sowie daß letzterer Meßwert zur Korrektur des bei der Messung der Gesamtmasse der Kohlenwasserstoffe erhaltenen Meßwertes herangezogen wird. Basierend auf der überraschend gefundenen Tatsache, daß die integrale Infrarot-Absorption elektromagnetischer Strahlung in schmalen Frequenzbändern, für alle Kohlenwasserstoffe praktisch gleich ist – und die relative integrale Infrarot-Absorption eines Abgases, beispielsweise bestehend aus einer Mischung von Propan, Isobutan, n-Decan und n-Hexadecan, bezogen auf eine genormte Gesamtmasse nur um ca. ± 1 bis 7% um einen Mittelwert schwankt – ist es möglich, die Gesamtmasse der Kohlenwasserstoffe in diesem Wellenlängenbereich mit hoher Meßgenauigkeit festzustellen, auch wenn die Zusammensetzung des Abgases großen Schwankungen unterworfen ist.

Genormte Gesamtmasse bedeutet dabei, daß die Infrarot-Absorption stets auf gleiche Randbedingungen bezogen ist, wie z.B. 1g/m³ Massenbeladung Kohlenwasserstoffe bei 760 Torr und 20°C Raumtemperatur.

Die Abweichungen vom Mittelwert für die integralen Intensitäten der Einzelkomponenten sind typischerweise im Bereich von ± 5 - 10% für n-Alkane (Propan bis Tetracosan), 0 - 20% für n-Alkane, iso-Alkane und Alkohole (Ethanol, Methanol).

Ein Frequenzband, welches die genannten Forderungen erfüllt, weist beispielsweise folgende Eigenschaften auf : Zentralwellenlänge 3,445 ± 0,03 µm, Halbwertsbreite 0,07 bis 0,14 µm, Flankenanstieg bzw. -abfall kleiner 2% bzw. kleiner 2,5% der Zentralwellenlänge oder Zentralwellenlänge 3,41 ± 0,015 µm, Halbwertsbreite kleiner 0,07 µm, Flankenanstieg bzw. -abfall kleiner 0,08% der Zentralwellenlänge.

Durch die Festlegung einer Cuton- bzw. Cutoff-Stelle des Frequenzbandes, d.h. jener Stellen, wo das Frequenzband eine definierte Intensität, bezogen auf die bei der Zentralwellenlänge gemessene Maximalintensität übersteigt, wird eine weitere Anforderung an die Form des Frequenzbandes gestellt, deren Erfüllung die erzielbare Meßgenauigkeit weiter erhöht.

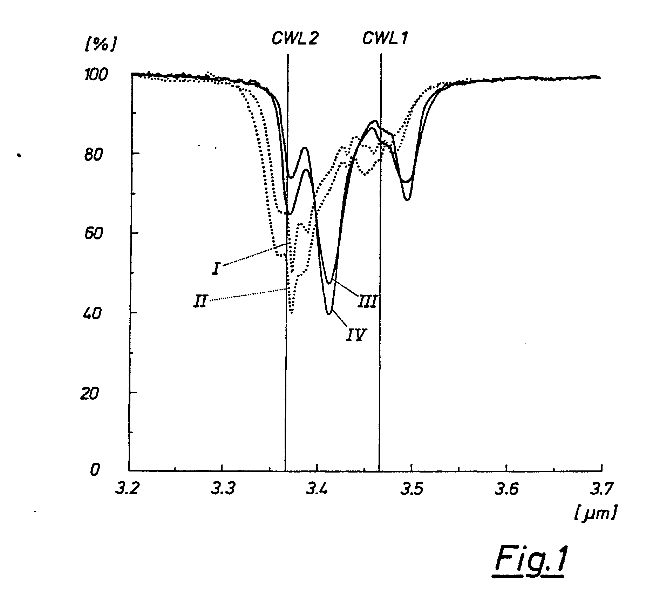

Zur näheren Erläuterung sind in Fig. 1 Infrarotspektren von gravimetrisch auf gleiche Gesamtmasse genormten Kohlenwasserstoffen dargestellt. Dabei ist auf der Abszisse die Wellenlänge in µm und auf der Ordinate die Transmission in % angegeben. Die Infrarotabsorption für bei 20°C nicht kondensierte Kohlenwasserstoffe, beispielsweise iso-Butan und Propan, gekennzeichnet durch I und II und für bei 20°C kondensierte Kohlenwasserstoffe, wie n-Dekan, n-Hexadekan, bezeichnet mit III, IV, weist im dargestellten Wellenlängenbereich starke Unterschiede auf. Dies wird dadurch hervorgerufen, daß die bei einer bestimmten Umgebungstemperatur von z.B. 20°C nicht kondensierten Kohlenwasserstoffe meist wesentlich mehr $CH_3$-Molekülanteile pro Volumen enthalten, als die langkettigen bei Umgebungstemperatur kondensierten Kohlenwasserstoffe. Trotzdem zeigt sich beispielsweise bei 3,465 µm gekennzeichnet mit CWL1 ein Bereich, wo die einzlnen Transmissionswerte der Kohlenwasserstoffe, aufintegriert über das durch das verwendete Frequenzband definierte Wellenlängenintervall, praktisch den gleichen Betrag aufweisen.

Durch die aus der Transmissionsmessung im Bereich von. 3,8 bis 4,15 µm ermittelte Gesamtmasse der in der Probe enthaltenen Kohlenstoffpartikel, kann der Beitrag deren Absorption im für die Messung der Gesamtmasse der gasförmigen und kondensierten Kohlenwasserstoffe verwendeten Wellenlängenbereich festgestellt werden. Durch Abzug dieser Störgröße von dem dem Kohlenwasserstoffgehalt entsprechenden Meßwert, kann dieser mit der genannten hohen Genauigkeit bestimmt werden.

Gemäß einer vorteilhaften Weiterbildung der Erfindung ist vorgesehen, daß zur Erfassung der Gesamtmasse der leicht flüchtigen, gasförmigen Kohlenwasserstoffe zusätzlich elektromagnetische Strahlung eines weiteren Frequenzbandes mit einer Zentralwellenlänge von 3,365 ± 0,025 µm, einer Halbwertsbreite < 0,1 µm, mit einem 5% Cuton bei einer Wellenlänge von > 3,29 µm und einem 5% Cutoff bei einer Wellenlänge von < 3,45 µm verwendet wird. Aus Fig. 1 ist weiters ersichtlich, daß sich im Wellenlängenbereich um 3,365 µm, gekennzeichnet durch CWL2, die Infrarotabsorption nicht kondensierter (I und II) und kondensierter Kohlenwasserstoffe (III,IV) stark unterscheidet. Durch die Verwendung von Infrarotstrahlung der genannten Frequenzbänder zur Kohlenwasserstoffmessung von Verbrennungsabgasen, wobei ein Frequenzband zur gravimetrischen Messung der Gesamtmasse aller Kohlenwasserstoffe dient und das zweite die bei Raumtemperatur von 20°C gasförmigen Kohlenwasserstoffe stärker gewichtet erfaßt, als die, zumindest zum Teil, bei Raumtemperatur kondensierten Kohlenwasserstoffe, ist es im Gegensatz zu derzeit bekannten Kohlenwasserstoffmeßsystemen möglich, aus den beiden erzielten Meßwerten die gravimetrischen Anteile der bei Raumtemperatur gasförmigen bzw. kondensierten Kohlenwasserstoffe des Verbrennungsabgases getrennt zu bestimmen. Weiters ist es möglich, dynamisch durch Messung der rein gasförmigen Kohlenwasserstoffe in Abgasmeßsystemen bei Temperaturen von 160 bis 200°C, mit üblichen Kondensationsberechnungen, die bei einer bestimmten Umgebungstemperatur, beispielsweise bei Raumtemperatur, als Kohlenwasserstoffpartikel ausfallenden Kohlenwasserstoffanteile des Verbrennungsabgases gravimetrisch zu berechnen.

Die Verwendung zweier Frequenzbänder, mit den Zentralwellenlängen CWL1 und CWL2 ermöglicht es somit, aus den dabei erhaltenen unterschiedlichen Meßwerten die Berechnung der Anteile der bei Raumtemperatur gasförmigen Kohlenwasserstoffe des Verbrennungsabgases durchzuführen. Mit dem nun bekannten Anteil der gasförmigen Kohlenwasserstoffe kann der Meßwert, welcher der Gesamtmasse der im Verbrennungsabgas enthaltenen gasförmigen und kondensierten Kohlenwasserstoffe entspricht, weiter korrigiert werden, da die Meßgenauigkeiten hauptsächlich durch Änderung der Konzentration der kurzkettigen Kohlenwasserstoffe des Verbrennungsabgases hervorgerufen wird. Es können damit noch bessere gravimetrische Meßgenauigkeiten mit Standardabweichungen von unter 5% erreicht werden.

In einer weiteren Ausgestaltung der Erfindung ist vorgesehen, daß zur Erzeugung des zur Bestimmung der Gesamtmasse der gasförmigen und kondensierten Kohlenwasserstoffe verwendeten Frequenzbandes ein Interferenzfilter im Strahlengang der elektromagnetischen Strahlung angeordnet wird, dessen Transmissionswert in einem zwischen 3,38 und 3,55 µm liegenden Wellenlängenintervall 50% der maximalen Transmission überschreitet, bzw. daß zur Erzeugung des zur Bestimmung der Gesamtmasse der leichtflüchtigen, gasförmigen Kohlenwasserstoffe verwendeten Frequenzbandes ein Interferenzfilter im Strahlengang der elektromagnetischen Strahlung angeordnet wird, dessen Transmissionswert in einem zwischen 3,31 und 3,42 µm liegenden Wellenlängenintervall 50% der maximalen Transmission überschreitet. Damit können zur Messung, bezogen auf ihre Zentralwellenlänge, stark asymmetrische Frequenzbänder herangezogen werden, wenn deren Halbwertspunkte innerhalb der oben genannten Grenzen liegen. Mit Halbwertspunkten werden dabei jene Stellen bezeichnet, an denen das Frequenzband 50% seiner maximalen Intensität über- bzw. unterschreitet.

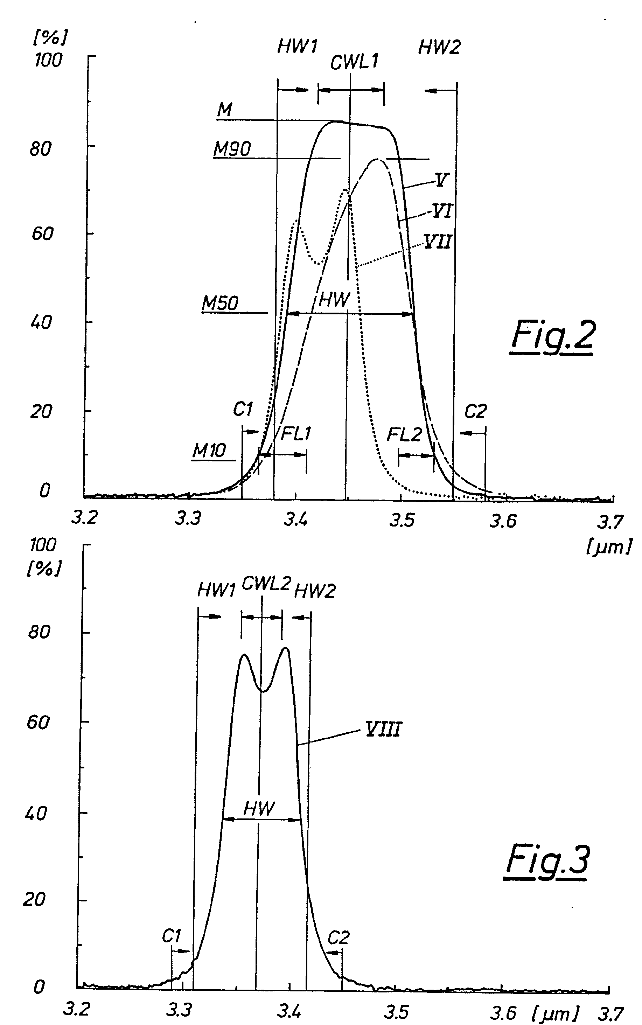

Die vorstehend genannten Anforderungen an die für die Durchführung des Verfahrens notwendigen Frequenzbänder sind am besten durch spezielle Interferenzfilter – vorzugsweise Interferenzbandpaßfilter – zu erfüllen. Transmissionskurven von Filtern zur Messung von Kohlenwasserstoffen mittels nicht dispersiver Infrarotspektroskopie sind in den Fig. 2 und 3 dargestellt.

Die Fig. 2 zeigt die Transmissionskurven V, VI und VII dreier Filter, die jedes für sich, zur Messung der Gesamtmasse der gasförmigen und kondensierten Kohlenwasserstoffe herangezogen werden können. Die Parameter der für die gravimetrische Messung geeigneten Interferenzfilter stellen sich zusammengefaßt folgendermaßen dar : die Zentralwellenlänge CWL 1 liegt bei 3,445 ± 0,03 µm, bei einer Halbwertsbreite HW von 0,07 bis 0,14 µm, gemessen bei 50% (M 50) der maximalen Intensität M. Dabei sollen jedoch die Halbwertspunkte HW1 bzw. HW2 > 3.38 bzw.< 3,55 µm sein. Die Steilheit der Flanken der Transmissionskurven ist in Fig. 2 durch den Anstieg von 10 auf 90%, bezeichnet mit M 10 bzw. mit M 90, der maximalen Intensitäten M, innerhalb eines Wellenlängenintervalls FL1, bzw. durch deren Abfall in einen Wellenlängenintervall FL2, gegeben. Der 5%-Cuton C1 liegt bei Werten > 3,35 µm ; der 5%-Cutoff C2 bei Werten < 3,58 µm.

Das in Fig. 3 durch seine Transmissionskurve VIII dargestellte Interferenzfilter, wird zur Messung der leicht flüchtigen, gasförmigen Kohlenwasserstoffe herangezogen. Dabei soll die Zentralwellenlänge CWL2 in einem Wellenlängenbereich von 3,365 ± 0,025 µm liegen und die Halbwertsbreite HW < 0,1 µm sein. Für die übrigen Parameter gilt ; Halbwertspunkte : HW1 > 3,29 µm, HW2 < 3,45 µm, Anstieg der Transmissionskurve von 10 auf 90% der maximalen Intensität innerhalb eines Bereiches < 1,5% der Zentralwellenlänge, gleiche Flankensteilheit am langwelligen Ende der Kurve, 5%-Cuton > 3,29 µm und 5%-Cutoff < 3,45 µm.

Durch den Einsatz dreier Interferezfilter, wobei eines in bekannter Weise zur gravimetrischen Messung der graphitischen Partikel des Verbrennungsabgases dient, und die anderen zwei erfindungsgemäß zur Bestimmung der Kohlenwasserstoffe im Verbrennungsabgas dienen, ist es möglich, eine dynamisch-gravimetrische Messung der Gesamtmasse der Kohlenwasserstoffe, der Masse der Gesamtpartikel, welche bei einer bestimmten Umgebungstemperatur von beispielsweise 20°C anfallen, der Masse der graphitischen Partikel, der Masse der bei dieser Temperatur vorhandenen kondensierten Kohlenwasserstoffpartikel und die Masse von nicht kondensierten, gasförmigen Kohlenwasserstoffen eines Verbrennungsabgases simultan in einem Meßvorgang zu bestimmen. Für die gemeinsame Messung dieser Daten waren bisher mehrere Meßgeräte, deren Meßsysteme zum Teil auf verschiedenen physikalischen Prinzipien beruhen, notwendig.

Eine dynamische Messung aller dieser Meßwerte mit einer Zeitauflösung von besser 0,2 sec war insbesondere bei gleichzeitiger Partikelmessung ebenfalls bisher nicht möglich.

In einer Weiterbildung der Erfindung ist vorgesehen, daß der Transmissionswert der Interferenzfilter außerhalb ihres Durchlässigkeitsbereiches in einem Wellenlängenintervall von 10 µm bis in den visuellen Bereich < 0,1% der maximalen Transmission im Bereich der jeweiligen Zentralwellenlänge beträgt. Dieses weitere Kennzeichen der im erfindungsgemäßen Verfahren verwendeten Interferenzfilter bezieht sich auf die Durchlässigkeit dieser außerhalb des für die Messung verwendeten Frequenzbereiches. Die als Blockung bezeichnete Größe soll außerhalb des Meßbereiches 0,1% der maximalen Intensität im Bereich der Zentralwellenlänge nicht überschreiten. Dieser Sachverhalt ist auch in den Fig. 2 und 3 deutlich ersichtlich, wo die Intensität der Transmission sowohl im kurzwelligen als auch im langwelligen Bereich rasch auf sehr kleine Werte abfällt.

Schließlich können erfindungsgemäß zur Erzeugung der verwendeten Frequenzbänder eine od. mehrere schmalbandig emittierende Infrarot-Quellen,beispielsweise Laser, verwendet werden.

**Ansprüche**

1. Verfahren zur quantitativen Messung von Kohlenwasserstoffen in Proben ungefilterter Verbrennungsabgase, wobei die Infrarottransmission der die Probe und ein Referenzvolumen durchdringenden elektromagnetischen Strahlung gemessen und die Differenz der Strahlungsintensitäten als entsprechender Meßwert verwendet wird, dadurch gekennzeichnet, daß zur Erfassung der Gesamtmasse der in der gasförmigen Probe vorhandenen gasförmigen und kondensierten Kohlenwasserstoffe elektromagnetische Strahlung eines Frequenzbandes mit einer Zentralwellenlänge von 3,445 ± 0,03 µm, einer Halbwertsbreite von 0,07 bis 0,14 µm, mit einem 5% Cuton bei einer Wellenlänge > 3,35 µm und einem 5% Cutoff bei einer Wellenlänge < 3,58 µm verwendet und dessen integrale Infrarotabsorption gemessen wird, daß die Gesamtmasse der in der Probe enthaltenen Kohlenstoffpartikel durch Messung der Infrarottransmission, bei Verwendung von Strahlung im Bereich von 3,8 bis 4,15 µm, festgestellt wird, sowie daß letzterer Meßwert zur Korrektur des bei der Messung der Gesamtmasse der Kohlenwasserstoffe erhaltenen Meßwertes herangezogen wird.

2. Verfahren nach Anspruch 1, dadurch gekennzeichnet, daß zur Erfassung der Gesamtmasse der leicht flüchtigen, gasförmigen Kohlenwasserstoffe zusätzlich elektromagnetische Strahlung eines weiteren Frequenzbandes mit einer Zentralwellenlänge von 3,365 ± 0,025 µm, einer Halbwertsbreite < 0,1 µm, mit einem 5% Cuton bei einer Wellenlänge von > 3,29 µm und einem 5% Cutoff bei einer Wellenlänge von < 3,45 µm verwendet wird.

3. Verfahren nach Anspruch 1 oder 2, dadurch gekennzeichnet, daß zur Erzeugung des zur Bestimmung der Gesamtmasse der gasförmigen und kondensierten Kohlenwasserstoffe verwendeten Freuenzbandes ein Interferenzfilter im Strahlengang der elektromagnetischen Strahlung angeordnet wird, dessen Transmissionswert in einem zwischen 3,38 und 3,55 µm liegenden Wellenlängenintervall 50% der maximalen Transmission überschreitet.

4. Verfahren nach Anspruch 2, dadurch gekennzeichnet, daß zur Erzeugung des zur Bestimmung der Gesamtmasse der leichtflüchtigen, gasförmigen Kohlenwasserstoffe verwendeten Frequenzbandes ein Interferenzfilter im Strahlengang der elektromagnetischen Strahlung angeordnet wird, dessen Transmissionswert in einem zwischen 3,31 und 3,42 µm liegenden Wellenlängenintervall 50% der maximalen Transmission überschreitet

5. Verfahren nach Anspruch 3 oder 4, dadurch gekennzeichnet, daß der Transmissionswert der Interferenzfilter außerhalb ihres Durchlässigkeitsbereiches in einem Wellenlängenintervall von 10 µm bis in den visuellen Bereich < 0,1% der maximalen Transmission im Bereich der jeweiligen Zentralwellenlänge beträgt.

6. Verfahren nach Anspruch 1 oder 2, dadurch gekennzeichnet, daß zur Erzeugung der verwendeten Frequenzbänder eine oder mehrere schmalbandig emittierende Infrarot-Quellen, beispielsweise Laser, verwendet werden.

## Claims

1. A method for quantitative analysis of hydrocarbons in samples of unfiltered exhaust gases, in which the infrared transmission of the electromagnetic radiation penetrating the sample and a reference volume is measured and the difference in radiation intensities is used as a measured value, wherein the total mass of gaseous and condensed hydrocarbons present in the gaseous sample is determined with the use of electromagnetic radiation with a frequency band of a central wavelength of 3.445 ± 0.03 µm, and a half-band width of 0.07 to 0.14 µm, and a 5% cuton at a wavelength of > 3.35 µm, and a 5% cutoff at a wavelength of < 3.58 µm, and the integral infrared absorption of this band is measured, and wherein the total mass of carbon particles contained in the sample is determined by measuring the transmission of infrared radiation in the range of 3.8 to 4.15 µm, and wherein the value obtained in this context is employed for correction of the value obtained upon measuring the total mass of hydocarbons.

2. A method as in claim 1, wherein the total mass of highly volatile, gaseous hydrocarbons is determined with the additional use of electromagnetic radiation of another frequency band with a central wavelength of 3.365 ± 0.025 µm, a half-band width of < 0.1 µm, a 5% cuton at a wavelength of > 3.29 µm, and a 5% cutoff at a wavelength of 3.45 µm.

3. A method as in claim 1 or 2, wherein for generation of the frequency band used for determining the total mass of gaseous and condensed hydrocarbons an interference filter is placed in the path of the electromagnetic radiation, whose transmission in a wavelength interval between 3.38 and 3.55 µm will exceed 50% of maximum transmission.

4. A method as in claim 2, wherein for generation of the frequency band used for determining the total mass of highly volatile, gaseous hydrocarbons an interference filter is placed in the path of the electromagnetic radiation, whose transmission in a wavelength interval between 3.31 and 3.42 µm will exceed 50% of maximum transmission.

5. A method as in claim 3 or 4, wherein transmission of the interference filters outside their pass band in a wavelength range from 10 µm up to visual range is less than 0.1% of the maximum transmission in the range of the respective central wavelength.

6. A method as in claim 1 or 2, wherein one or more narrow-band emitting infrared sources, e.g. lasers, are used for generating the frequency bands required.

## Revendications

1. Procédé pour la mesure quantitative d'hydrocarbures dans des échantillons des gaz d'échappement, provenant de la combustion, non filtrés, procédé dans lequel on mesure la transmission infrarouge du rayonnement électro-magnétique traversant l'échantillon et un volume de référence, et l'on utilise la différence des intensités de rayonnement comme valeur de mesure correspondante, procédé caractérisé en ce que, pour détecter la masse totale des hydrocarbures sous forme gazeuse et condensés présents dans l'échantillon sous forme gazeuse, on utilise le rayonnement électromagnétique d'une bande de fréquences d'une longueur d'onde centrale de 3,445 ± 0,03 µm, une largeur de valeur moyenne de 0,07 à 0,14 µm, avec une coupure intérieure de 5% pour une longueur d'onde > 3,35 µm et une coupure extérieure de 5% pour une longueur d'onde < 3,58 µm, et mesure l'absorption infrarouge intégrale en ce que la masse totale des particules de carbone contenues dans l'échantillon est déterminée par la mesure de la transmission infrarouge, en utilisant un rayonnement dans la zone de 3,8 à 4,15 µm, et en ce que l'on sert de cette dernière valeur de mesure pour corriger la valeur de mesure obtenue lors de la mesure de la masse totale des hydrocarbures.

2. Procédé selon la revendication 1, caractérisé en ce que, pour détecter la masse totale des hydrocarbures facilement volatils, sous forme gazeuse, on utilise en plus le rayonnement électromagnétique d'une autre bande de fréquences, comportant une longueur d'onde centrale de 3,365 ± 0,025 µm, une largeur de valeur moyenne < 0,1 µm, avec une coupure intérieure de 5% pour une longueur d'onde > 3,29 µm et une coupure extérieure de 5% pour une longueur d'onde < 3,45 µm.

3. Procédé selon la revendication 1 ou 2, caractérisé en ce que, pour produire la bande de fréquences utilisée afin de déterminer la masse totale des hydrocarbures sous forme gazeuse et condensés, l'on dispose un filtre d'interférences, dans le trajet des rayons du rayonnement électromagnétique, dont la valeur de transmission, dans un intervalle de longueurs d'ondes se situant entre 3,38 et 3,55 µm, dépasse 50% de la transmission maximale.

4. Procédé selon la revendication 2, caractérisé en ce que, pour produire la bande de fréquences utilisée afin de déterminer la masse totale des hydrocarbures facilement volatils, sous forme gazeuse, on dispose un filtre d'interférences, dans le trajet des rayons du rayonnement électromagnétique, dont la valeur de transmission dans un intervalle de longueurs d'ondes se situant entre 3,31 et 3,42 µm, dépasse 50% de la transmission maximale.

5. Procédé selon la revendication 3 ou 4, caractérisé en ce que la valeur de transmission des filtres d'interférences, en dehors de leur zone de perméabilité dans un intervalle de longueurs d'ondes allant de 10 µm jusqu'à la zone visuelle, est inférieur à 0,1% de la transmission maximale dans la zone de la longueur d'onde centrale considérée.

6. Procédé selon la revendication 1 ou 2, caractérisé en ce que, pour produire les bandes de fréquences mises en oeuvre, on utilise une plusieurs sources infrarouges, par exemple laser, émettrices à bande étroite.

*Fig.1*

*Fig.2*

*Fig.3*

8